# EUROPÄISCHE PATENTSCHRIFT

(11) **EP 0 733 688 B1**
(45) Veröffentlichungstag und Bekanntmachung des Hinweises auf die Patenterteilung: **09.06.1999**
(21) Anmeldenummer: 96104192.8
(22) Anmeldetag: 15.03.1996
(51) Int. Cl.: C09J 5/00

(54) **Verfahren zum Verkleben von Körpern mittels wässriger Haftklebedispersersionen auf Acrylat/Methacrylat-Basis unter Verwendung eines destabilisierenden Agens DA**
Process for bonding objects with aqueous adhesive dispersions based on acrylate/methacrylates using a destabilizing agent
Procédé de collage d'objets en utilisant des dispersions aqueuses à partir d'acrylate/méthacrylate contenant un agent de déstabilisation

(30) Priorität: 24.03.1995 DE 19510814
(43) Veröffentlichungstag der Anmeldung: 25.09.1996
(73) Patentinhaber: Röhm GmbH, 64293 Darmstadt (DE)
(72) Erfinder: Wedel, Bernd, 68623 Lampertheim (DE); Daum, Helmut, 64342 Seeheim-Jugenheim (DE); Müller, Klaus, 64401 Gross-Bieberau (DE); Jagsch, Karl-Heinz, 64572 Büttelborn (DE); Müller, Gunther, Dr., 64579 Gernsheim (DE)

(56) Entgegenhaltungen:
- EP-A- 0 145 686
- EP-A- 0 408 386
- EP-A- 0 451 554
- EP-A- 0 596 300
- DATABASE WPI Week 8724 Derwent Publications Ltd., London, GB; AN 87-167600 XP002008421 & JP-A-62 100 570 (NITTO ELECTRIC) , 11.Mai 1987

## Beschreibung

### Gebiet der Erfindung

Die Erfindung betrifft ein Verfahren zum Verkleben von Kunststoff-, Holz-, Papier-, Keramik- oder Metallteilen mittels wäßriger Haftklebedispersionen auf Acrylat/Methacrylat-Basis.

### Stand der Technik

Haftklebedispersionen werden aufgrund ihrer ökologischen und arbeitssicherheitstechnischen Vorteile zunehmend gegenüber herkömmlichen, lösemittelhaltigen Haftklebestoffen bevorzugt und finden eine breite Anwendung z. B. bei der Verklebung von Schaumstoffteilen in der Möbel- und Automobilindustrie. Haftklebedispersionen bestehen aus Klebstoffteilchen, die in einer wäßrigen Phase fein verteilt sind. Die feine Verteilung der Klebstoffteilchen in der wäßrigen Phase ermöglicht neben einer guten Verarbeitbarkeit vor allem einen guten Kontakt zur verklebenden Oberfläche. Nach dem Verdampfen des Wassers bilden die Klebstoffteilchen einen Klebefilm. Bringt man die Klebefilme zweier zu verklebender Teile ggf. unter Druck zusammen, kommt es zu einem Verschmelzen der Klebefilme und dadurch zu einer dauerhaften Verklebung.

Die Klebstoffteilchen bestehen bevorzugt aus Polymersystemen mit Glastemperaturen, die in der Regel unter - 10 ° C liegen. Neben Kautschuk, Polyvinylethern, Polyisobutylentypen, oft in Kombination mit Phenolformaldehyd- oder Kohlenwasserstoffharzen, werden häufig auch Poly(meth)acrylate eingesetzt. Diese können in Gegenwart von radikalbildenden Polymerisationsinitiatoren und von Molekulargewichtsreglern z. B. im Batch-Verfahren oder im Zulaufverfahren, bei denen Emulgatoren oder Monomere während der Polymerisation zudosiert werden, hergestellt werden. Die Polymerisation der Monomere kann einstufig oder mehrstufig erfolgen. Häufig werden im mehrstufigen Verfahren Kern/Schale-Polymerisate erzeugt (vgl. Houben-Weyl, Methoden der Organischen Chemie, 4. Auflage, Bd. XIV, G. Thieme 1961; H. Raunch-Puntigam, Th. Völker, Acryl- und Methacrylverbindungen, S. 221, Springer Verlag 1967)

Um die polymeren Klebstoffteilchen in der Dispersion zu stabilisieren, enthalten die Haftklebedispersionen meist Emulgatoren. Haftklebedispersionen, die nur wenig oder keinen Emulgator enthalten, bieten anwendungstechnische Vorteile. So ist z. B. die Schaumbildung vermindert. Die Stabilisierung dieser Dispersionen erfolgt häufig durch Copolymerisation von Säuren, z. B. 0,5 - 10 Gew.-% Acrylsäure bezogen auf das Gesamt-Polymer der Klebeteilchen. Die japanische Patentschrift JP 62 100 570 (Siehe auch: Chemical Abstracts 107: 199822a, 1987) beschreibt wäßrige Haftklebedispersionen auf Basis von Alkyl(meth)acrylaten mit hohem Feststoffgehalt ohne Zusatz von Emulgatoren. Die Klebstoffteilchen weisen einen Kern/Schale-Aufbau auf, wobei die äußere Schale der Klebstoffteilchen aus einem Copolymeren aus 45 Teilen Butylacrylat und 5 Teilen Acrylsäure besteht. Da kein Emulgator vorhanden ist, sind die Acrylsäuregruppen des Polymeren wesentlich für die Stabilität der Dispersion.

Vor allem wegen der geringeren Flüchtigkeit von Wasser im Vergleich zu organischen Lösungsmitteln haben die wäßrigen Systeme generell den Nachteil, daß vergleichsweise längereTrocknungszeiten bzw. ein zusätzlicher Trocknungsschritt notwendig sind, um klebrige Polymerfilme mit ausreichender Anfangshaftung zu bilden. Zur Entfernung des Wassers aus der Haftklebedispersion können die damit versehenen, zu verklebenden Teile z. B. warmer Luft ausgesetzt werden oder einfach längere Zeit stehen gelassen werden. Bei zu kurzer Trocknungszeit kann die Klebewirkung ungenügend sein, da sich die Klebefilme noch nicht in ausreichender Weise auf den Oberflächen ausgebildet haben. In diesem Fall haften die Klebeteile nicht aneinander.

EP-A-0 408 386 beschreibt Klebstoffe aus zwei Komponenten, wobei die erste Komponente eine wäßrige Dispersion aus einem Polymer und einem Harzes, das zur Interaktion mit dem Polymer fähig ist, besteht, und dessen zweite Komponente aus einem Destabilisator besteht. Zur Bewirkung der Klebeverbindung ist ein Trocknungsschritt notwendig.

### Aufgabe und Lösung

Der Erfindung liegt die Aufgabe zugrunde, ein Verfahren bereitzustellen, das es erlaubt, mit einer wäßrigen Haftklebedispersion versehene Teile ohne einen Trocknungsschritt unmittelbar nach dem Aufbringen des Klebmittels dauerhaft zu verkleben. Die Aufgabe wurde gelöst durch ein Verfahren zum Verkleben von Körpern mittels einer wäßrigen Haftklebedispersion aus Copolymeren, bestehend aus mehr als 70 Gew.-% C₁ - C₁₄ Alkyl(meth)acrylaten und gegebenenfalls weiteren vinylisch polymerisierbaren Comonomeren und aus einem Anteil von Acryl- oder Methacrylsäure von 0,5 bis 10 Gew.-%, bezogen auf die eingesetzten Monomere, mit einer Glastemperatur *T*_{g} unter - 10°C, mit einem Emulgatoranteil von höchstens 1 Gew.-% bezogen auf das Polymer und einem Feststoffanteil von 10 bis 65 Gew.-% bezogen auf die Dispersion, die auf die zu verklebenden Oberflächen aufgebracht wird,
dadurch gekennzeichnet, daß
die Haftklebedispersionsschichten mit einem destabilisierenden Agens DA, das eine wäßrige Lösung einer Säure oder eines Salzes einer Säure oder eines Elektrolyts ist, in Kontakt gebracht werden, wodurch die Dispersion destabilisiert wird und die zu verklebenden Oberflächen ohne einen weiteren Trocknungsschritt miteinander verklebt werden, indem man sie miteinander in Berührung bringt.

Das Prinzip der Erfindung nutzt die vergleichsweise geringe Stabilität von wäßrigen Alkyl(meth)acrylat-Haftklebedispersionen mit begrenztem Säureanteil in der äußeren Polymerschicht, die keinen oder nur einen geringen Emulgatoranteil aufweisen. Das Verfahren eignet sich für Haftklebedispersionen mit einem Feststoffgehalt von 10 Gew.-% bis 65 Gew.-%. Die sofortige Verklebbarkeit, ohne Trocknungsschritt zur Entfernung des Wassers, wird durch die Destabilisierung der Dispersion, z. B. durch Besprühen mit einer verdünnten Säure oder einer Elektrolytlösung bewirkt. Es wird vermutet, daß die Klebeteilchen auf der zu verklebenden Oberfläche zu einem Film verschmelzen, wodurch die Adhäsion zum Substrat bewirkt wird. Die zu verklebenden Körper, z. B. Teile aus Kunststoff, Papier, Pappe, Holz, Keramik, Metall oder Textilstoffen, können unmittelbar zusammengefügt werden, wobei das Wasser aus der Dispersion zur Seite oder in Poren der zu verklebenden Teile verdrängt wird. Bei der Berührung der Klebefilme tritt sofort eine dauerhafte Verbindung der Klebefilme auf. Das verdrängte Wasser ist nicht störend und verdunstet, während die Teile bereits verklebt sind. Das erfindungsgemäße Verfahren erspart den herkömmlichen, zeit- und/oder energieaufwendigen Trockenschritt bei der Verarbeitung wäßriger Haftklebedispersionen.

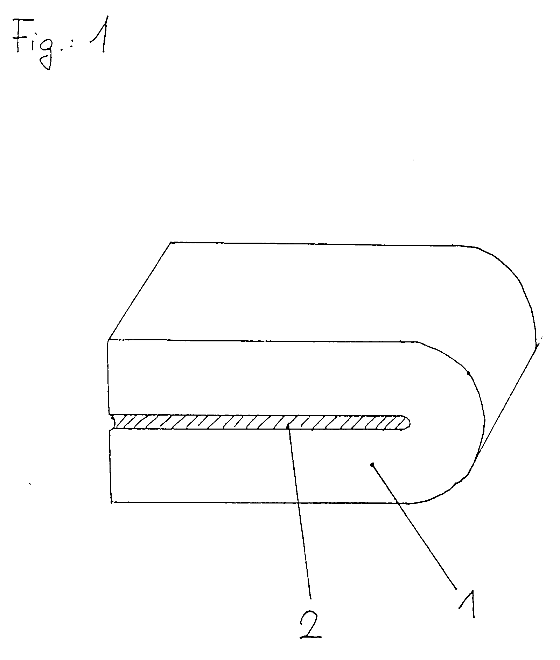

- Figur 1:: Zusammengeklappter Probekörper aus Schaumstoff
1 = Probekörper
2 = Klebefilm

### Ausführung der Erfindung

Ein wesentliches Merkmal des erfindungsgemäßen Verfahrens ist das destabilisierende Agens DA. Ein destabilisierendes Agens DA im Sinne der Erfindung ist die wäßrige Lösung einer Säure oder eines Elektrolyts, das in die Dispersion eingebracht, zu einer Verfilmung der Klebeteilchen führt. Geeignet sind z. B. Lösungen mit ca. 2 - 10 Gew.-% Citronensäure oder Trinatriumcitrat, 0,1 - 1N Essigsäure oder Natriumacetat, 0,5 - 4 %-ige Lösung von H₃PO₄ oder (NH₄)₂HPO₄, 0,01 - 1N HCl, 2 - 20 %-ige wäßrige Lösungen von Erdalkalisalzen wie CaCl₂, CaHCO₃, Ca(NO₃)₂, oder MgSO₄.

Die destabilisierende Wirkung wird erreicht, indem das destabilisierende Agens DA mit den auf die zu verklebenden Teile aufgebrachten Haftklebedispersionsschichten in Kontakt gebracht wird. Dies kann z. B. durch ein Besprühen oder Zerstäuben der wäßrigen Lösung mit dem destabilisierenden Agens DA geschehen.

Das erfindungsgemäße Verfahren eignet sich für wäßrige Haftklebedispersionen aus Copolymerisaten aus mehr als 70 Gew.-% C₁ - C₁₄ Alkyl(meth)acrylaten, z. B. Butylacrylat, mit einem Anteil von 0,5 bis 10 Gew.-% Acryl- oder Methacrylsäure bezogen auf die eingesetzten Monomere und einer Glastemperatur *T*_{g} unter - 10 ° C. Als weitere vinylisch polymerisierbare Comonomere können gegebenenfalls z. B. Styrol, Acrylnitril oder Hydroxyalkyl(meth)acrylate im Polymer enthalten sein. Die Gesamtzusammensetzung der verwendeten Monomere muß in einem Copolymeren mit einer Glastemperatur *T*g von unter - 10 ° C resultieren, da sonst keine ausreichenden Klebeeigenschaften vorhanden sind.

Die Glastemperatur *T*_{g} kann z. B. der Literaturstelle Brandrup und E.H. Immergut, "Polymer Handbook" Interscience 1966, S. III-61 bis III-63, oder dem "Kunststoffhandbuch", Band IX, Herausgeber R. Vieweg und F. Esser, Carl-Hanser-Verlag, München 1975, S. 333 bis 339 und T.G. Fox in "Bull. Am. Physics Soc.", Vol. I, (3) S. 123 (1956) entnommen werden.

Es wird vermutet, daß die destabilisierende Wirkung auf der Wechselwirkung des destabilisierenden Agens DA mit den Säuregruppen an den Wasser/Polymer-Grenzschichten der Dispersionsteilchen beruht. Eine Protonierung dieser Säuregruppen durch Absenken des pH-Werts bei der Verwendung einer Säure, z. B. HCl, kann zur Destabilisierung einzelner Polymerpartikel führen, die dann durch ein Miteinander-Verschmelzen die Filmbildung in der Dispersion einleiten. In ähnlicher Weise ist es denkbar, daß die Interaktion von Ionen, wie z. B. Ca⁺⁺, mit den Säuregruppen benachbarter Polymerpartikel gewissermaßen über eine Brückenbildung die Filmbildung einleitet.

Der Feststoffgehalt muß zwischen 10 und 65 Gew.-% bezogen auf die Dispersion liegen. Unterhalb dieses Bereiches tritt keine oder keine ausreichende Destabilisierung ein, oberhalb macht das Verfahren keinen Sinn, da die Verarbeitbarkeit außerordentlich schlecht ist.

Die Dispersion darf weiterhin nicht mehr als ca. 1 Gew.-% eines Emulgators enthalten. Bei Haftklebedispersionen, die die genannten Eigenschaften nicht erfüllen, tritt keine oder eine nicht ausreichende Destabilisierung der Dispersion ein.

Die destabilisierende Wirkung kann z. B. gezeigt werden, indem man zwei Probekörper, z. B. zwei Metall- oder Kunststoffplättchen mit einer wäßrigen Haftklebedispersion, die die oben genannten Eigenschaften besitzt, einstreicht, mit dem destabilisierenden Agens DA besprüht, und die Teile dann unmittelbar mit den eingestrichenen Flächen zusammenfügt. Eine ausreichende destabilisierende Wirkung ist dann vorhanden, wenn die Plättchen aneinander haften und beim gewaltsamen Auseinanderziehen Klebefäden sichtbar werden.

Die destabilisierende Wirkung hängt von der Art und der Konzentration und der aufgebrachten Menge des destabilisierenden Agens DA und von der Beschaffenheit der Haftklebedispersion und der Dicke der aufgebrachten Schichten ab. Ferner können die Umgebungstemperatur und die Art und Oberflächenbeschaffenheit der zu verklebenden Teile einen Einfluß auf das Klebeverfahren haben. Die folgende Angabe soll als Richtwert dienen. Bei einer Verwendungsmenge von z. B. 350 g/m² einer Haftklebedispersion mit einem Feststoffgehalt von ca. 50 Gew.-% kann die Destabilisierung z. B. durch gleichmäßiges Aufsprühen von ca. 100 ml 5%-iger Citronensäure bewirkt werden.

Bei Haftklebedispersionen mit relativ hohem Emulgatorgehalt, z. B. 0,5 - ca. maximal 1 Gew.-%, wird man in der Regel mehr oder höher konzentriertes destabilisierendes Agens DA verwenden als bei Haftklebedispersionen ohne oder mit nur geringem Emulgatoranteil. Das gleiche trifft sinngemäß auf den Säureanteil der äußeren Polymerschicht zu. Ist dieser hoch wird man eher mehr oder höher konzentriertes destabilisierendes Agens DA verwenden. Es ist jedoch auch möglich, daß bestimmte Optima innerhalb der genannten Bereiche auftreten.

Der Fachmann kann die jeweils günstigste Kombination von gewählter Haftklebedispersion, zu verklebendem Substrat und geeignetem destabilisierendem Agens DA, dessen Konzentration und Aufbringungsmenge in einfacher Weise durch entsprechende Vorversuche ermitteln. Er kann dazu ein Probestück seiner zu verklebenden Teile mit der gewählten Haftklebedispersion einstreichen und dann mit dem destabilisierenden Agens DA, z. B. 5%-ige Citronensäurelösung oder 10%-ige CaCl₂-Lösung besprühen und anschließend die Teile zusammenfügen. Ist die Klebewirkung wunschgemäß, so ist die Konzentration und die z. B. als Sprühnebel aufgebrachte Menge ausreichend. Das Verfahren kann praktisch unabhängig von den individuellen Klebeeigenschaften der jeweils verwendeten Haftklebedispersion eingesetzt werden, sofern die oben genannten Eigenschaften erfüllt sind. Somit eignet sich das Verfahren generell zum Verkleben von Körpern, die z. B. aus Kunststoff, Papier, Pappe, Holz, Keramik, Metall oder Textilstoffen bestehen können, wobei sich sowohl gleichartige Materialien als auch unterschiedliche Materialien miteinander verkleben lassen.

### BEISPIEL

Das folgende Beispiel soll die Erfindung näher erläutern.

Es wird eine wäßrige Haftklebedispersion mit folgenden Eigenschaften eingesetzt:

Polymeraufbau : Copolymerisat, hergestellt durch Zulaufpolymerisation (4h bei 70 ° C) ohne Emulgator in vollentsalztem Wasser in Gegenwart von 0,4 Gew.-% Kaliumperoxodisulfat als Radikalstarter, bestehend aus ca. 98 Gew.-% n-Butylacrylat und 2 Gew.-% Acrylsäure, wobei die Acrylsäure erst nach der halben Polymerisationszeit in das Butylacrylat eingerührt wurde, so daß ein Kern/Schale-Aufbau der Polymerteilchen mit Polybutylacrylat im Kern und einer äußeren Schale aus Butylacrylat/Acrylsäure-Copolymer vorliegt.

Der Feststoffgehalt beträgt ca. 59 Gew.-%
Der mittlere Teilchenradius beträgt ca. 360 nm
Die Viskosität bei 20 ° C beträgt ca. 300 mPa·s

### Prüfkörper:

Als Prüfkörper wird ein Schaumstoffblock aus weichem Polyurethan mit den Maßen 30 x 160 x 70 mm (Höhe x Länge x Breite) verwendet.

### Destabilisierendes Agens DA:

Im Versuch A: 5%-ige Citronensäure-Lösung in vollentsalztem Wasser

Im Versuch B: 10%-ige CaCl₂-Lösung in vollentsalztem Wasser

(Vergleichsversuch C : Vollentsalztes Wasser ohne destabilisierendes Agens DA)

### Vorgehensweise:

Der Prüfkörper wird flach hingelegt. Auf die große obere Fläche wird die Haftklebedispersion mit einem Rakel so aufgebracht, daß die Oberfläche vollständig mit dieser benetzt ist. Die Auftragsmenge entspricht ca. 3,5 g.

Unmittelbar darauf wird das destabilisierende Agens DA (A oder B) aus einer Zerstäuberflasche auf die Haftklebedispersionsschicht gesprüht. Die versprühte Menge, durch Wiegen ermittelt, beträgt ca. 1 g.

Der Prüfkörper wird nun in der Mitte zusammengeklappt, so daß die Haftklebedispersionsschicht mit sich selbst in Kontakt kommt (Siehe Figur 1)

### Versuchsergebnisse:

Bei Verwendung des destabilisierenden Agens DA A bzw. B, in den Versuchen A bzw. B, bleibt der unter Spannung stehende Probekörper zusammengeklappt. Beim Versuch, die Klebeschicht zu trennen, reißt der Schaumstoff, jedoch nicht die Klebeschicht. Die Klebewirkung entspricht derjenigen, die ohne destabilisierendes Agens DA erhalten wird, wenn ein zusätzlicher Trocknungsschritt, z. B. Trockenen unter warmer Luft, angewendet wird. Verwendet man nur Wasser und kein destabilisierendes Agens DA (Versuch C), so klappt der unter Spannung stehende Kunststoff direkt nach dem Zusammendrücken wieder auf.

## Patentansprüche

1. Verfahren zum Verkleben von Körpern mittels einer wäßrigen Haftklebedispersion aus Copolymeren, bestehend aus mehr als 70 Gew.-% C₁ - C₁₄ Alkyl(meth)acrylaten und gegebenenfalls weiteren vinylisch polymerisierbaren Comonomeren und aus einem Anteil von Acryl- oder Methacrylsäure von 0,5 bis 10 Gew.-%, bezogen auf die eingesetzten Monomere, mit einer Glastemperatur unter - 10 °C, mit einem Emulgatoranteil von höchstens 1 Gew.-% bezogen auf das Polymer und einem Feststoffanteil zwischen 10 und 65 Gew.-% bezogen auf die Dispersion, die auf die zu verklebenden Oberflächen aufgebracht wird,
dadurch gekennzeichnet, daß
die Haftklebedispersionsschichten mit einem destabilisierenden Agens DA, das eine wäßrige Lösung einer Säure oder eines Salzes einer Säure oder eines Elektrolyts ist, in Kontakt gebracht werden, wodurch die Dispersion destabilisiert wird und die zu verklebenden Oberflächen ohne einen weiteren Trocknungsschritt miteinander verklebt werden, indem man sie miteinander in Berührung bringt.

2. Verfahren nach Anspruch 1, dadurch gekennzeichnet, daß die Körper aus Kunststoff, Papier, Pappe, Holz, Keramik, Metall oder Textilstoffen bestehen.

3. Verfahren nach einem oder mehreren der Ansprüche 1 bis 2, dadurch gekennzeichnet, daß als destabilisierendes Agens DA 2 - 20 %-ige Lösungen von CaCl₂, CaHCO₃, Ca(NO₃)₂ oder MgSO₄, verwendet wird.

4. Verfahren nach Anspruch 1 oder 2, dadurch gekennzeichnet, daß als Säure, HCI, Citronensäure, Essigsäure oder Phosphorsäure verwendet wird.

5. Verwendung des Verfahrens nach einem der Ansprüche 1, 3 oder 4 zum Verkleben von Körpern.

6. Verwendung nach Anspruch 5 dadurch gekennzeichnet, daß die Körper aus Kunststoff, Papier, Pappe, Holz, Keramik, Metall oder Textilstoffen bestehen.

## Claims

1. A process for bonding articles by means of an aqueous adhesive dispersion comprising copolymers which consist of more than 70 wt.% of C₁-C₁₄ alkyl(meth)acrylates and, optionally, further vinylically polymerisable comonomers and an amount of acrylic or methacrylic acid of 0.5 to 10 wt.%, based on the monomers used, with a glass transition temperature below -10°C, with an amount of emulsifier of not more than 1 wt.% and a solid content of between 10 and 65 wt.% based on the dispersion applied to the surfaces to be bonded, characterised in that the layers of adhesive dispersion are brought into contact with a destabilising agent DA which is an aqueous solution of an acid or a salt of an acid or an electrolyte, resulting in the destabilising of the dispersion, and the surfaces to be joined together are adhesively bonded, without a further drying step, by bringing them into contact with each other.

2. A process according to claim 1, characterised in that the articles are made of plastic material, paper, cardboard, wood, ceramics, metal or textile materials.

3. A process according to one or more of claims 1 and 2, characterised in that a 2 - 20% solution of CaCl₂, CaHCO₃, Ca(NO₃)₂ or MgSO₄ is used as the destabilising agent DA.

4. A process according to claim 1 or 2, characterised in that HCl, citric acid, acetic acid or phosphoric acid is used as an acid.

5. Use of the process according to one of claims 1, 3 or 4 for adhesively bonding articles.

6. Use according to claim 5, characterised in that the articles consist of plastics, paper, cardboard, wood, ceramics, metal or textile materials.

## Revendications

1. Procédé pour couler des articles moyens d'une dispersion aqueuse d'adhésif faite de copolymères comprenant plus de 70 % en poids de (méth)acrylates d'alkyle en C₁ à C₁₄ et le cas échéant d'autres comonomères vinyliquement polymérisables, et d'une proportion d'acide acrylique ou d'acide méthacrylique de 0,5 à 10 % en poids, par rapport au monomère utilisé, avec une température de transition vitreuse inférieure à -10°C, avec une fraction émulsifiante d'au plus 1 % en poids par rapport au polymère et une proportion de solides de 10 à 65 % en poids par rapport à la dispersion qui est déposée sur les surfaces à coller,
caractérisé en ce que
on met en contact les couches de dispersion d'adhésif avec un agent déstabilisant AD qui est une solution aqueuse d'un acide ou d'un sel d'un acide ou d'un électrolyte, ce qui fait que la dispersion est déstabilisée et que les surfaces à coller peuvent être collées les unes aux autres sans autre étape de séchage lorsqu'on les met en contact les unes avec les autres.

2. Procédé selon la revendication 1,
caractérisé en ce que
les articles sont faits de matière plastique, de papier, de carton, de bois, de céramique, de métal ou de textile.

3. Procédé selon une ou plusieurs des revendications 1 à 2,
caractérisé en ce qu'
on utilise comme agent déstabilisant AD des solutions de 2 à 20 % en poids de CaCl₂, CaHCO₃, Ca(NO₃)₂ ou MgSO₄.

4. Procédé selon les revendication 1 ou 2,
caractérisé en ce qu'
on utilise comme acide HCl, l'acide citrique, l'acide acétique ou l'acide phosphorique.

5. Utilisation du procédé selon l'une des revendications 1, 3 ou 4 pour coller des articles.

6. Utilisation selon la revendication 5,
caractérisée en ce que
les articles se composent de matière plastique, de papier, de carton, de céramique, de métal ou de textile.
